# FASCICULE DE BREVET EUROPEEN

(11) **EP 2 368 135 B1**
(45) Date de publication et mention de la délivrance du brevet: **25.11.2015**
(21) Numéro de dépôt: 09771366.3
(22) Date de dépôt: 11.12.2009
(51) Int. Cl.: G01S 13/52

(54) **PROCEDE POUR FILTRER LES ECHOS RADARS PRODUITS PAR DES EOLIENNES**
VERFAHREN ZUM FILTERN DER DURCH WINDTURBINEN PRODUZIERTEN RADARECHOS
METHOD FOR FILTERING THE RADAR ECHOES PRODUCED BY WIND TURBINES

(30) Priorité: 19.12.2008 FR 0807211
(43) Date de publication de la demande: 28.09.2011
(73) Titulaire: THALES, 92400 Courbevoie (FR)
(72) Inventeur: MORUZZIS, Michel, F-91290 La Norville (FR); BEAUQUET, Gilles, F-92100 Boulogne (FR); CAMPOY, Frédéric, F-92220 Bagneux (FR)
(74) Mandataire: Lucas, Laurent Jacques
(86) Numéro de dépôt international: PCT/EP2009/066985
(87) Numéro de publication internationale: WO 2010/069886

(56) Documents cités:
- WO-A-2008/145993
- US-A- 5 327 141
- US-A- 5 686 919
- US-A1- 2008 111 731
- TENNANT A ET AL: "Signature management of radar returns from wind turbine generators" SMART MATERIALS AND STRUCTURES, IOP PUBLISHING LTD., BRISTOL, GB, vol. 15, no. 2, 1 avril 2006 (2006-04-01), pages 468-472, XP020105371 ISSN: 0964-1726

## Description

L'invention se rapporte au domaine de la surveillance radar de zones de l'espace aérien. Elle concerne plus particulièrement la surveillance aérienne basse altitude de zones plus ou moins densément peuplées d'objet fixes comportant des parties mobiles, des éoliennes par exemple.

Dans le domaine de la détection radar il est connu de mettre en oeuvre des procédés de traitement permettant de s'affranchir des échos émanant d'objets immobiles, encore appelés échos fixes. Divers traitement connus, non décrits ici, permettent d'identifier des objets complètement fixes et de traiter les échos réfléchis par ces objets de manière séparée, ce traitement pouvant consister en une simple élimination ou encore en une utilisation pour déterminer le positionnement géographique et l'étendue de tels objets. L'identification des échos fixes permet avantageusement d'éviter que les plots correspondants ne soient transmis à la fonction de pistage du radar, et ne surcharge cette fonction en induisant l'initialisation de pistes qui sont éliminées sitôt initialisées.

De manière très générale et connue, l'identification des échos fixes se fait par simple filtrage Doppler réalisé dans le domaine spectral, l'écho réfléchi par un objet complètement fixe, un bâtiment ou un élément de relief par exemple, étant affecté d'une fréquence Doppler nulle ou, dans le cas d'éléments de végétation tels que des arbres par exemple, d'une fréquence Doppler très faible correspondant au mouvement des frondaisons. Par suite l'élimination de tels échos est réalisée par simple filtrage en rejetant les échos dont la fréquence Doppler est faible, voire nulle.

En ce qui concerne l'élimination des échos réfléchis par des objets fixes une situation particulière, fortement perturbante, est crée par la présence d'éoliennes dans l'espace surveillé par le radar. En effet les éoliennes quoique étant des objets immobiles, dont la position est en principe invariante, présentent cependant des parties mobiles, animées généralement de mouvements rotatifs. Ces parties mobiles sont principalement constituées par les pales qui entrent en rotation sous l'action du vent, et dont la vitesse de rotation dépend de la vitesse du vent. Ces parties mobiles sont également constituées par le rotor dans son ensemble, rotor qui s'oriente automatiquement dans la direction du vent.

Le mouvement des éléments mobiles d'une éolienne a pour conséquence que l'écho réfléchi par une éolienne peut être affecté d'une fréquence Doppler dont la valeur est comparable à celle d'échos mobiles correspondant à des objets en mouvement dont la progression nécessite en particulier d'être prise en compte par la fonction de pistage. Ainsi par exemple, la vitesse typique de déplacement de l'extrémité d'une pale d'éolienne est de l'ordre de 250 km/h, vitesse qui correspond à celle de certains avions de tourisme. Par suite une simple élimination par filtrage Doppler de ces échos n'est pas envisageable sous peine d'éliminer également les échos d'objets réellement en mouvement.

L'identification et l'élimination des échos provenant d'éoliennes est un problème qui revêt un caractère particulièrement actuel. En effet, la prolifération des éoliennes dans les paysages actuels a pour effet que dans certaines zones faisant l'objet d'une surveillance radar, surveillance aussi bien civile que militaire, l'implantation d'un nombre conséquent d'éoliennes occasionne une gêne qui altère l'efficacité du système radar. En effet en l'absence de traitement particulier, les échos réfléchis par des éoliennes sont assimilés à des échos mobiles. Par suite ces échos occasionnent périodiquement l'initialisation de pistes ce qui a pour effet d'induire un accroissement inutile de la charge de calcul de la fonction de pistage, accroissement d'autant plus important que le nombre d'éoliennes localisées dans l'espace couvert par le radar considéré est plus grand.

Selon l'état de l'art actuel, il existe des méthodes connues pour résoudre le problème posé par les échos provenant d'éoliennes. Ces méthodes, non décrites ici, sont généralement basées sur l'acquisition par le radar de la position des éoliennes présentes dans l'espace considéré. La solution utilisée consiste généralement à invalider la détection de tout écho radar dans une zone incluant les éoliennes. Elle consiste alternativement à maintenir active la détection des échos dans les zones considérées mais à activer la fonction NAI ("Non Automatic Initiation" selon la dénomination anglo-saxonne) chargée d'interdire au niveau du pistage radar, dans les zones considérées, l'initialisation automatique des pistes à partir des plots formés. L'initialisation de pistes dans ces zones doit alors être gérée par un opérateur.

Ces méthodes présentent l'avantage de ne nécessiter aucun traitement particulier des échos reçus. Les échos provenant des zones inhibées sont, par principe, éliminés ou ne donnent du moins naissance à aucune initialisation de piste.

En revanche, elles présentent l'inconvénient d'interdire une détection rapide de cibles apparaissant dans une zone pour laquelle l'inhibition des plots (ou des pistes) est activée. Cette limitation est par exemple pénalisante pour la détection d'aéronefs hostiles se démasquant au-dessus d'une colline sur laquelle est implanté un champ d'éoliennes.

Ces méthodes présentent également l'inconvénient d'occasionner potentiellement des pertes de pistes établies, particulièrement dans le cas où un aéronef pisté vient à entrer dans une telle zone ou encore vient à manoeuvrer dans une telle zone.

Elles présentent enfin l'inconvénient de n'être applicables que dans le cas où l'espace couvert par le radar ne renferme qu'un petit nombre d'éoliennes localisées dans quelques zones précises. Elles deviennent pratiquement inutilisables dans le cas où des éoliennes sont présentes en grand nombre et localisées dans des zones diverses.

Par conséquent la mise en oeuvre de telles méthodes ne peut être considérée comme acceptable que si la taille des zones occupées par les éoliennes est suffisamment réduite. Or, la généralisation de l'exploitation de l'énergie éolienne conduit à étendre considérablement les zones d'implantation des éoliennes, ce qui entrave fortement la mission opérationnelle de certains radars, en particulier les radars de contrôle du trafic aérien, civil ou militaire, placés dans des sites où ils sont environnés d'éoliennes.

Face à la prolifération des éoliennes, des travaux ont été menés pour tenter d'améliorer globalement le fonctionnement des radars dans un tel environnement. Ainsi, la demande de brevet pour les Etats Unis d'Amérique déposée par la société Raytheon, publiée le 15 mai 2008 sous la référence US20080/111731 et intitulée "Dual beam radar system" aborde le sujet des méthodes de filtrage des échos d'éoliennes. Cependant le problème est ici abordé en termes d'altitude, en considérant que les éoliennes ont une hauteur inférieure à une limite fixée, de sorte que l'écho provenant d'un petit aéronef volant à basse altitude peut être assimilé à un écho d'éolienne et par suite éliminé.

Par conséquent il n'existe à ce jour aucune solution réllement satisfaisante au problème posé par la présence d'éoliennes.

Un but de l'invention est de proposer une solution permettant d'éviter que les échos réfléchis par des éoliennes ne viennent surcharger la fonction de pistage du radar, en multipliant notamment les initialisations de pistes. Un autre but de l'invention est de permettre à un radar placé dans un environnement peuplé d'éolienne d'assurer la continuité du pistage des objets mobiles même lorsque ceux-ci sont amenés à traverser des zones de l'espace dans lesquelles se trouvent situées des éoliennes.

A cet effet l'invention a pour objet un procédé pour filtrer les échos radars produits par des éoliennes, lesdites éoliennes étant positionnées dans l'espace couvert par un radar comportant des moyens pour réaliser le pistage automatique des échos mobiles. Le procédé, appliqué sur le signal radar reçu S_{b}(t) par analyse de ce signal sur une durée donnée, comporte principalement:
- un premier module de reconnaissance du signal réfléchi par une éolienne et de constitution d'un modèle s(t) de signal parasite, ce modèle constituant une estimation, pour la durée considérée, du signal réfléchi par une éolienne;
- un second module de filtrage du signal radar reçu S_{b}(t), le filtrage consistant à soustraire le signal s(t) au signal S_{b}(t).

Le signal filtré S_{f}(t) est transmis aux fonctions de traitement du signal situées en aval du procédé.

Selon l'invention, la reconnaissance du signal réfléchi par une éolienne est réalisée en analysant la variation au cours du temps, pendant la durée d'observation, de l'amplitude du signal brut S_{b}(t) reçu.

Dans un mode de mise en oeuvre particulier de l'invention, la reconnaissance d'un signal réfléchi par une éolienne est réalisée en recherchant des pics d'amplitude et en déterminant la durée de ces pics et l'écart d'amplitude existant entre ces pics et la valeur moyenne du signal S_{b}(t) sur la durée d'observation, cet écart étant comparé à un seuil fixé, le franchissement du seuil signifiant que le signal est considéré comme un signal réfléchi par une éolienne.

Dans une variante de ce mode de mise en oeuvre particulier, le modèle de signal parasite s(t) constitué est un signal dont l'amplitude aux instants où le signal S_{b}(t) présente des pics d'amplitude, est égale à l'amplitude de S_{b}(t) et dont l'amplitude est nulle le reste du temps.

Dans un autre variante, le modèle de signal parasite s(t) constitué est un signal dont l'amplitude, dans le cas où le signal est considéré comme un signal réfléchi par une éolienne, est égale à l'amplitude maximale de S_{b}(t).

Dans un mode de mise en oeuvre particulier de l'invention, le premier module réalise la constitution d'un modèle s(t) de signal parasite à partir d'informations externes temps réel transmises au radar, ces informations fournissant des indications relatives à l'état de fonctionnement de l'éolienne dont le signal a été détecté.

Selon l'invention, le premier module de reconnaissance du signal réfléchi par une éolienne peut en outre comporter un sous-module de filtrage des signaux correspondant à des échos fixes.

Le procédé selon l'invention peut en outre comporter un module complémentaire pour réaliser l'estimation du niveau ambiant A(t) dans chaque zone pour laquelle le signal reçu S_{b}(t) est reconnu comme correspondant au signal réfléchi par une éolienne, le niveau estimé étant transmis au traitement situé en aval du procédé.

Le procédé selon l'invention présente l'avantage de mettre en oeuvre une méthode de suppression cohérente d'un signal parasite provenant d'une éolienne, tout en maintenant des conditions de détection optimales des signaux utiles.

Par ailleurs, Le procédé selon l'invention permet avantageusement, pour certaines applications radar comme par exemple le contrôle du trafic aérien civil, de tirer parti d'informations externes telles que, par exemple, la position des éoliennes.

Les caractéristiques et avantages de l'invention seront mieux appréciés grâce à la description qui suit, description qui expose l'invention au travers d'un mode de réalisation particulier pris comme exemple non limitatif et qui s'appuie sur les figures annexées, figures qui représentent:
- la figure 1, un schéma de principe présentant les modules de traitement constituant le procédé selon l'invention,
- la figure 2, un spectrogramme présentant un exemple de signal réfléchi par une éolienne;
- la figure 3, un chronogramme montrant l'évolution au cours du temps de l'amplitude du signal brut reçu par le radar lorsque ce signal correspondant à l'exemple de signal réfléchi par une éolienne dont le spectrogramme est présenté sur la figure 2;
- les figures 4 et 5, des chronogrammes mettant en évidence l'avantage procuré par la mise en oeuvre d'un module de filtrage des échos fixes par le procédé selon l'invention.

La solution proposée consiste à identifier et par suite à supprimer, de manière cohérente, les signaux parasites provoqués par les réflexions du signal radar sur les pales des éoliennes.

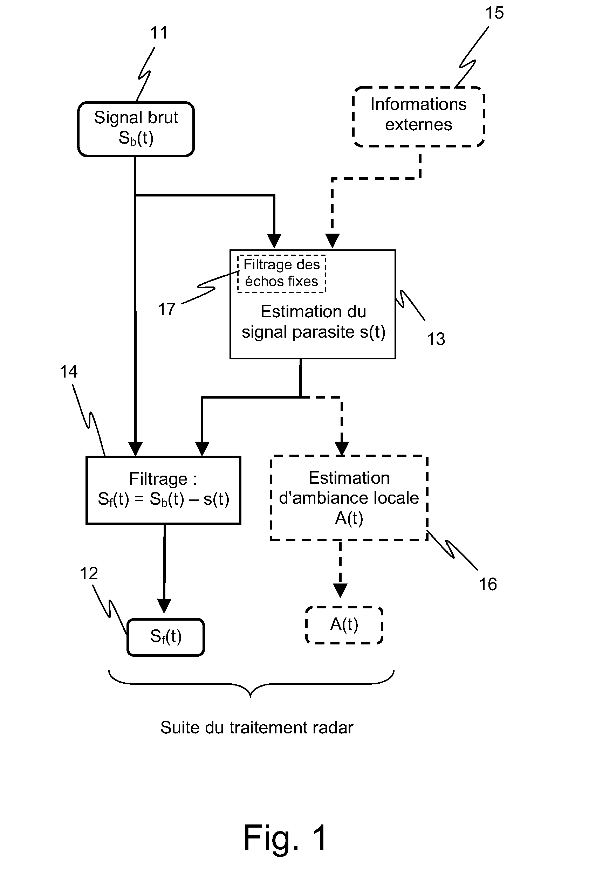

On considère la figure 1 qui présente un organigramme de principe du procédé selon l'invention.

Le procédé selon l'invention a pour fonction de déterminer si le signal radar S_{b}(t) reçu à un instant t correspond ou non au signal réfléchi par une éolienne. Selon l'invention le signal est analysé sur une durée donné correspondant au temps d'illumination de la direction considérée par le signal radar. Il comporte principalement deux modules de traitement qui sont appliqués au signal brut 11, S_{b}(t), reçu par le radar, modules qui coopèrent en vue d'obtenir le résultat souhaité, à savoir produire un signal filtré 12 débarrassé des échos provenant d'éoliennes et transmettre le signal filtré au reste de la chaîne de traitement cohérent. Le premier module de traitement 13, est principalement chargé de permettre l'établissement d'un modèle de signal temporel pouvant représenter au mieux le signal réellement réfléchi par une éolienne. Le second module de traitement 14 est quant à lui chargé du filtrage proprement dit.

Le premier module 13 de modélisation s'appuie sur la connaissance des caractéristiques du signal réfléchi par une éolienne et une identification de certaines de ces caractéristiques dans le signal reçu à un instant donné.

Dans une forme simple du procédé selon l'invention, forme qui ne nécessite la transmission d'aucune information particulière au radar, la connaissance des caractéristiques du signal réfléchi par une éolienne est principalement une connaissance a priori. Selon l'invention, le module 13 procède à l'analyse de certaines caractéristiques du signal S_{b}(t) reçu pour déterminer si ce signal correspond ou non à un signal réfléchi par une éolienne, autrement dit pour reconnaître un écho d'éolienne.

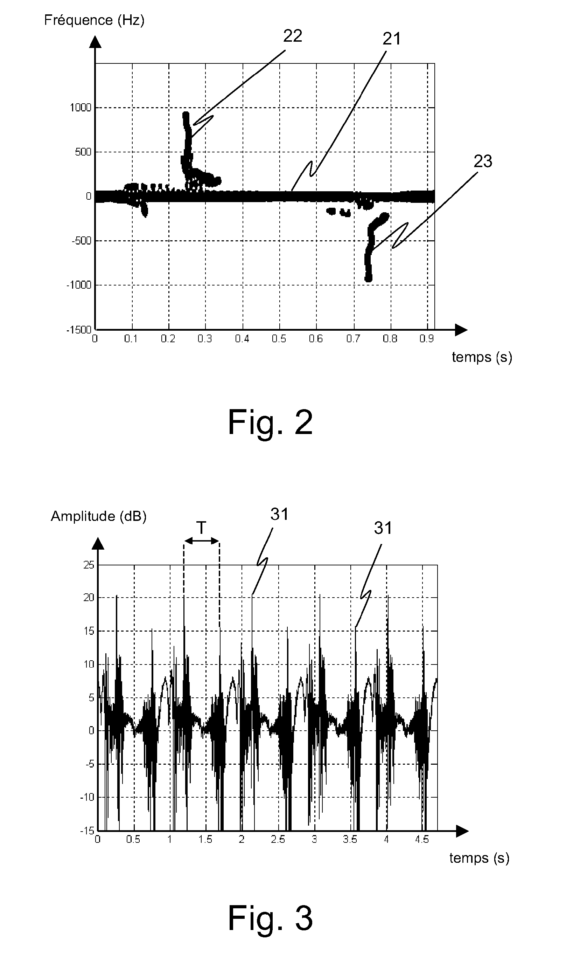

Le traitement s'appuie pour cela sur le fait que la signature spectrale de ce signal n'est pas stationnaire, comme l'illustre le spectrogramme de la figure 2. En effet, compte tenu notamment de l'asynchronisme existant entre le séquencement des illuminations réalisées par le radar et la vitesse de rotation des pales d'une éolienne, le signal réfléchi par une éolienne présente un spectre Doppler qui varie de manière particulière au cours du temps.

Le spectrogramme de la figure 2 présente un exemple de signal réfléchi par une éolienne. Ce spectrogramme est tracé pour une durée d'observation correspondant à une rotation de 1/3 de tour du rotor d'une éolienne comportant classiquement 3 pales. Il représente une période complète du signal tel qu'il est reçu par le radar. Ce spectrogramme périodique permet de distinguer essentiellement:
- un signal permanent 21 à fréquence nulle (ou ayant des composantes très basses fréquences) qui correspond essentiellement aux signaux réfléchis par les parties fixes ou faiblement mobiles de l'éolienne, signal qui constitue la composante "continue" du signal global,
- deux signaux larges bande 22 et 23 de durées très courtes, correspondant au signal réfléchi par l'éolienne aux instants où les pales sont perpendiculaires à l'axe de visée du radar et présentent donc une forte réflectivité. L'une de ces composantes correspond à une pale avançant et l'autre à une pale reculant.

Cette caractéristique particulière de non-stationnarité spectrale se traduit dans le domaine temporel, par une fluctuation importante de l'amplitude du signal réfléchi par une éolienne pendant la durée d'illumination. En pratique, comme l'illustre la figure 3, le signal réfléchi par une éolienne se présente comme une suite de pics d'amplitude 31 de durée brève se répétant de manière périodique avec une période 32 grande devant la durée des pics 31.

L'amplitude de ce signal est principalement fonction des caractéristiques physiques de l'éolienne, tandis que la durée des pics d'amplitude 31 est notamment fonction des dimensions des pales, de leur vitesse de rotation ω, ainsi que de la longueur d'onde λ de l'onde émise par le radar. La période de répétition T des pics d'amplitude est quant à elle fonction de la vitesse de rotation ω des pales de l'éolienne.

Le procédé selon l'invention met à profit ces caractéristiques temporelles pour effectuer l'identification d'un écho d'éolienne à partir de la représentation temporelle du signal reçu. En pratique, le module 23 de modélisation analyse le signal S_{b}(t) reçu sur une durée définie, le temps d'illumination par exemple, et mesure les variations d'amplitude du signal sur cette durée.

Dans un premier mode de mise en oeuvre, la modélisation est réalisée en déterminant la valeur moyenne de l'amplitude du signal S_{b}(t) et l'écart maximal d'amplitude, E, par rapport à cette valeur. Cet écart E est alors comparé à un seuil. Par suite, si l'écart est supérieur à ce seuil le signal S_{b}(t) est considéré comme correspondant au signal réfléchi par une éolienne. Le signal modèle s(t) est alors un signal dont l'amplitude est nulle lorsque le signal S_{b}(t) présente une amplitude proche de sa valeur moyenne et dont l'amplitude est égale à l'écart E entre l'amplitude maximale de S_{b}(t) et sa valeur moyenne lorsque cet écart est supérieur au seuil considéré.

Dans un mode de mise en oeuvre alternatif l'écart détecté est non seulement comparé à un seuil, mais la durée de la variation d'amplitude est prise en compte pour déterminer, a priori, à partir de la forme d'onde du radar (longueur d'onde) et de la connaissance des propriétés typiques des éoliennes (plage de longueur des pales, plage de période de rotation du rotor, nombre de pales) si un signal présentant une telle variation d'amplitude correspondant vraisemblablement au signal réfléchi par une éolienne. Ainsi, en fixant par exemple une durée minimale, on exclut de l'identification les signaux présentant des variations d'amplitude jugées a priori trop brèves pour correspondre au signal réfléchi par une éolienne. Par suite, le signal S_{b}(t) ayant satisfait les deux conditions d'amplitude et de durée, est considéré comme correspondant au signal réfléchi par une éolienne.

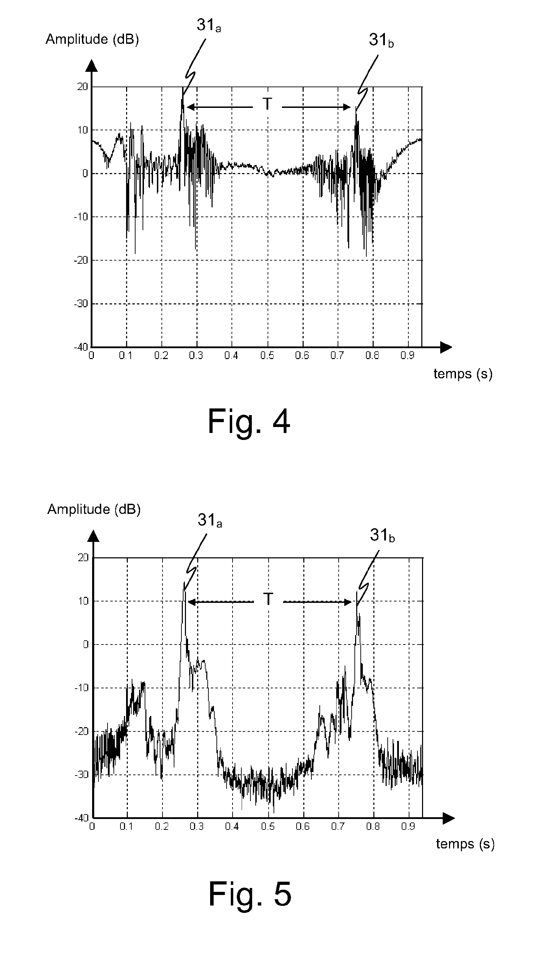

Dans ces formes simples du procédé selon l'invention, le signal modèle s(t) est, dans tous les cas, déterminé par analyse du signal reçu, en fonction des caractéristiques de l'éolienne définies a priori. Le signal s(t) généré est alors par exemple un signal dont l'amplitude est nulle lorsque le signal S_{b}(t) présente une amplitude proche de sa valeur moyenne et dont l'amplitude est égale à l'écart E entre l'amplitude maximale de S_{b}(t) et sa valeur moyenne lorsque cet écart est supérieur au seuil considéré. Alternativement, s(t) peut par exemple consister en un signal dont l'amplitude est égale à l'amplitude maximale de S_{b}(t) pour toute la durée d'analyse, la durée d'illumination par exemple, lorsque le signal S_{b}(t) est reconnu comme un signal réfléchi par une éolienne ou d'amplitude nulle pour toute la durée d'analyse lorsque le signal S_{b}(t) n'est pas reconnu comme un signal réfléchi par une éolienne.
Il est à noter que, pour faciliter les mesures d'amplitude réalisées et en particulier pour éviter que la présence d'échos fixes de fort niveau dans la zone analysée ne vienne altérer fortement les mesures d'amplitude, le module 13 comporte, dans un mode de mise en oeuvre préféré, un sous-module 17 d'élimination des échos fixes. L'élimination des échos fixes est ici réalisée par tout moyen connu, par réjection spectrale des signaux à fréquence nulle par exemple. L'utilisation de ce sous-module 17 permet d'identifier de manière plus efficace la présence du signal parasite, même lorsque son amplitude est petite par rapport à celle des échos fixes qui l'accompagnent (comme par exemple les échos provoqués par la réflexion sur le mât ou la nacelle de l'éolienne). L'intérêt de ce sous-module est illustré par les figures 4 et 5.

La figure 4 présente le chronogramme d'un exemple de signal S_{b}(t) réfléchi par une éolienne. Le signal présenté est ici le même que le signal dont le spectrogramme est présenté à la figure 2. Il représente une période complète du signal tel qu'il est reçu par le radar. Comme on peut le constater le niveau moyen du signal reçu est relativement fort car il est constitué de la combinaison des échos fixes (mât, nacelle, parties fixe du rotor) formant un signal de fond et des échos mobiles (parties mobiles du rotor) réfléchis par l'éolienne, représentés par les pics d'amplitude 31ₐ et 31_{b}. Par suite l'écart entre le niveau des pics d'amplitude 31 et le niveau moyen du signal est limité. De la sorte il est parfois difficile d'identifier un écho d'éolienne par simple mesure de cet écart.

La figure 5 présente quant à elle le chronogramme du même exemple de signal après application d'une opération de filtrage visant à éliminer les composantes de ce signal correspondant aux échos fixes. Les échelles de représentation utilisées sont ici les mêmes que celles de la figure 4. Comme on peut le constater sur la figure 5, la variation de l'amplitude du signal est beaucoup plus facile à distinguer, après application d'un filtre rejetant les échos fixes, que sur la figure 4, en particulier, au niveau des pics 31 qui correspondent aux instants où la réflexion sur les pales est importante. Il est à noter à ce sujet qu'un des pics, 31ₐ par exemple, correspond à la pale qui du fait de la rotation se rapproche du radar, et que l'autre pic, 31_{b} par exemple, correspond à la pale qui s'éloigne du radar.

Le signal modèle s(t) qui représente le signal parasite est transmis au module de filtrage 14 qui a pour fonction principale d'éliminer du signal S_{b}(t) reçu toute composante parasite correspondant au signal réfléchi par une éolienne. Par suite, l'opération de filtrage consiste, de manière simple, à soustraire le modèle de signal s(t) défini par le module 13 au signal radar brut S_{b}(t). On obtient ainsi un signal filtré, débarrassé totalement ou partiellement de sa composante parasite suivant que les caractéristiques d'amplitude et de durée du signal s(t) correspondent plus ou moins étroitement à celles du signal réellement réfléchi par une éolienne.

Cette première forme simple du procédé selon l'invention, présente l'avantage de pouvoir être mise en oeuvre par n'importe quel équipement radar existant, en ce sens qu'elle ne nécessite la mise en place d'aucune structure complémentaire. Un radar fonctionnant seul peut intégrer dans son traitement cohérent le procédé selon l'invention, moyennant simplement la mémorisation d'un modèle de comportement d'éolienne plus ou moins sophistiqué à partir duquel un modèle de signal réfléchi peut être construit a priori en temps réel. Ce modèle de signal s(t) est alors utilisé par le module de filtrage pour éliminer du signal reçu les échos parasites que constituent les échos d'éoliennes. Cependant, compte tenu qu'un tel modèle ne prend pas en compte l'état réel à l'instant considéré de l'éolienne illuminée par le radar, le modèle de signal ne correspond qu'approximativement au signal réellement réfléchi par l'éolienne. Par suite le filtrage réalisé n'élimine le signal parasite que de manière incomplète.

C'est pourquoi dans une forme plus sophistiquée, le module de modélisation 13 du procédé selon l'invention comporte un module d'échange de données, chargé notamment de recevoir en temps réel, c'est-à-dire avec une cadence de renouvellement liée à la constante de temps typique des éoliennes (typiquement quelques secondes), les données relatives au fonctionnement des éoliennes présentes dans l'espace surveillé par le radar. Ces informations sont principalement l'orientation du rotor ainsi que la vitesse de rotation et l'orientation des pales. Ce peut être encore une date de synchronisation, la date à laquelle le rotor passe par une position angulaire de référence connue par exemple. Cette dernière information est fournie à chaque tour de rotor, c'est à dire typiquement toutes les 2 à 3s pour une éolienne classique.

Ces informations associées aux données correspondant aux caractéristiques statiques telle que la dimension des pales permettent au module de modélisation de construire en temps réel un signal modèle s(t) véritablement proche du signal réellement réfléchi par l'éolienne considérée. Par suite l'efficacité du module de filtrage 14 se trouve généralement grandement accrue. Néanmoins, l'apport de ces données externes est plus ou moins important selon le type de radar. Par exemple, pour des radars monostatiques ou multistatiques à antenne fixe, qui ont la capacité de recevoir en permanence des signaux réfléchis par les cibles dans tout ou partie de leur couverture, il n'est pas indispensable de disposer des données dynamiques, dans la mesure où le radar est capable d'élaborer lui-même une estimation temporelle du signal parasite.

Quelle que soit la forme de mise en oeuvre du procédé selon l'invention, forme simple sans apport externe d'informations relatives aux éoliennes ou bien forme plus élaborée avec échanges d'informations, celui-ci peut comporter, outre ses modules principaux 13 et 14, un module complémentaire 16 chargé de réaliser une estimation locale d'ambiance A(t). Cette estimation locale a pour objet d'intégrer dans l'estimation d'ambiance normalement réalisée dans un secteur donné, la contribution de la présence d'une éolienne à ce niveau ambiant, les échos d'éoliennes étant ainsi considérés comme un fouillis particulier dont les caractéristiques sont transmises à la chaîne de traitement cohérent, située en aval du traitement réalisé par le procédé selon l'invention. Cette estimation d'un niveau d'ambiance local peut en particulier être mise avantageusement à profit par le traitement cohérent pour éviter de fausser les estimations d'ambiance réalisées sur des zones voisines des zones contenant des éoliennes.

## Revendications

1. Procédé pour filtrer les échos radars produits par des éoliennes, lesdites éoliennes étant positionnées dans l'espace couvert par un radar comportant des moyens pour réaliser le pistage automatique des échos mobiles, le procédé étant **caractérisé en ce qu'**il réalise une analyse temporelle, sur une durée donnée, du signal brut S_{b}(t) reçu par le radar, ledit radar comportant:
- un premier module (13) de reconnaissance du signal réfléchi par une éolienne par analyse des variations d'amplitude du signal brut S_{b}(t) sur la durée considérée et de constitution d'un modèle s(t) de signal parasite, ce modèle constituant une estimation, pour la durée considérée, du signal réfléchi par une éolienne;
- un second module (14) de filtrage du signal radar reçu S_{b}(t), le filtrage consistant à soustraire le signal s(t) au signal S_{b}(t);
le signal filtré S_{f}(t) étant transmis aux fonctions de traitement du signal situées en aval du procédé.

2. Procédé selon la revendication 1, **caractérisé en ce que** la reconnaissance du signal réfléchi par une éolienne est réalisée en analysant la variation au cours du temps, pendant la durée d'observation, de l'amplitude du signal brut S_{b}(t) reçu.

3. Procédé selon la revendication 2, **caractérisé en ce que** la reconnaissance d'un signal réfléchi par une éolienne est réalisée en recherchant des pics d'amplitude et en déterminant la durée de ces pics et l'écart d'amplitude existant entre ces pics et la valeur moyenne du signal S_{b}(t) sur la durée d'observation, cet écart étant comparé à un seuil fixé, le franchissement du seuil signifiant que le signal est considéré comme un signal réfléchi par une éolienne.

4. Procédé selon la revendication 3, **caractérisé en ce que** le modèle de signal parasite s(t) constitué est un signal dont l'amplitude aux instants où le signal S_{b}(t) présente des pics d'amplitude, est égale à l'amplitude de S_{b}(t) et dont l'amplitude est nulle le reste du temps.

5. Procédé selon la revendication 3, **caractérisé en ce que** le modèle de signal parasite s(t) constitué est un signal dont l'amplitude, dans le cas où le signal est considéré comme un signal réfléchi par une éolienne, est égale à l'amplitude maximale de S_{b}(t).

6. Procédé selon la revendication 1, **caractérisé en ce que** le premier module (13) réalise la constitution d'un modèle s(t) de signal parasite à partir d'informations externes (15) temps réel transmises au radar, ces informations fournissant des indications relatives à l'état de fonctionnement de l'éolienne dont le signal a été détecté.

7. Procédé selon l'une des revendications précédentes, **caractérisé en ce que** le premier module (13) de reconnaissance du signal réfléchi par une éolienne comporte en outre un sous-module (17) de filtrage des signaux correspondant à des échos fixes.

8. Procédé selon l'une des revendications précédentes, **caractérisé en ce qu'**il comporte en outre un module complémentaire (16) pour réaliser l'estimation du niveau ambiant A(t) dans chaque zone pour laquelle le signal reçu S_{b}(t) est reconnu comme correspondant au signal réfléchi par une éolienne, le niveau estimé étant transmis au traitement situé en aval du procédé.

## Patentansprüche

1. Verfahren zum Filtern der von Windturbinen erzeugten Radarechos, wobei die Windturbinen in dem von einem Radar abgedeckten Bereich positioniert sind, umfassend Mittel zum automatischen Verfolgen von sich bewegenden Echos, wobei das Verfahren **dadurch gekennzeichnet ist, dass** es eine zeitliche Analyse, über eine gegebene Dauer, des von dem Radar empfangenen Rohsignals S_{b}(t) durchführt, wobei das Radar Folgendes umfasst:
ein erstes Modul (13) zum Erkennen des von einer Windturbine reflektierten Signals durch Analysieren von Amplitudenvariationen des Rohsignals S_{b}(t) über die betrachtete Dauer und zum Erstellen eines Störsignalmodells s(t), wobei das Modell eine Schätzung, für die betrachtete Dauer, des von einer Windturbine reflektierten Signals beinhaltet;
ein zweites Modul (14) zum Filtern des empfangenen Radarsignals S_{b}(t), wobei die Filterung im Subtrahieren des Signals s(t) von dem Signal S_{b}(t) besteht;
wobei das gefilterte Signal S_{f}(t) zu den stromabwärts von dem Verfahren befindlichen Signalverarbeitungsfunktionen übertragen wird.

2. Verfahren nach Anspruch 1, **dadurch gekennzeichnet, dass** das von einer Windturbine reflektierte Signal durch Analysieren der Variation über die Zeit, während der Beobachtungsdauer, der Amplitude des empfangenen Rohsignals S_{b}(t) erkannt wird.

3. Verfahren nach Anspruch 2, **dadurch gekennzeichnet, dass** ein von einer Windturbine reflektiertes Signal durch Suchen von Amplitudenspitzen und Ermitteln der Dauer dieser Spitzen und der zwischen diesen Spitzen und dem Mittelwert des Signals S_{b}(t) über die Beobachtungsdauer vorliegenden Amplitudenabweichung erkannt wird, wobei diese Abweichung mit einem festen Schwellenwert verglichen wird, wobei das Überschreiten des Schwellenwerts bedeutet, dass das Signal als ein von einer Windturbine reflektiertes Signal angesehen wird.

4. Verfahren nach Anspruch 3, **dadurch gekennzeichnet, dass** das erstellte Störsignalmodell s(t) ein Signal ist, dessen Amplitude zu den Zeitpunkten, an denen das Signal S_{b}(t) die Amplitudenspitzen hat, gleich der Amplitude von S_{b}(t) ist und dessen Amplitude für den Rest der Zeit null ist.

5. Verfahren nach Anspruch 3, **dadurch gekennzeichnet, dass** das erstellte Störsignalmodell s(t) ein Signal ist, dessen Amplitude, falls das Signal als ein von einer Windturbine reflektiertes Signal angesehen wird, gleich der maximalen Amplitude von S_{b}(t) ist.

6. Verfahren nach Anspruch 1, **dadurch gekennzeichnet, dass** das erste Modul (13) ein Störsignalmodell s(t) auf der Basis von zu dem Radar übertragenen externen Echtzeitinformationen (15) erstellt, wobei die Informationen Indikatoren in Bezug auf den Betriebszustand der Windturbine erzeugen, für die das Signal erkannt wurde.

7. Verfahren nach einem der vorherigen Ansprüche, **dadurch gekennzeichnet, dass** das erste Modul (13) zum Erkennen des von einer Windturbine reflektierten Signals ferner ein Submodul (17) zum Filtrieren von Signalen umfasst, die festen Echos entsprechen.

8. Verfahren nach einem der vorherigen Ansprüche, **dadurch gekennzeichnet, dass** es ferner ein zusätzliches Modul (16) zum Schätzen des Umgebungsniveaus A(t) in jeder Zone umfasst, für die das empfangene Signal S_{b}(t) als dem von einer Windturbine reflektierten Signal entsprechend anerkannt wird, wobei das geschätzte Niveau zu den stromabwärts von dem Verfahren befindlichen Verarbeitungsfunktionen übertragen wird.

## Claims

1. A method for filtering the radar echoes produced by wind turbines, said wind turbines being positioned in the area covered by a radar comprising means for automatically tracking moving echoes, said method being **characterised in that** it carries out a temporal analysis, over a given duration, of the raw signal S_{b}(t) received by said radar, said radar comprising:
a first module (13) for recognising the signal reflected by a wind turbine by analysing variations in the amplitude of the raw signal S_{b}(t) over the considered duration and for generating a spurious signal model s(t), said model forming an estimate, for the considered duration, of the signal reflected by a wind turbine;
a second module (14) for filtering the received radar signal S_{b}(t), the filtering involving subtracting the signal s(t) from the signal S_{b}(t);
the filtered signal S_{f}(t) being transmitted to the signal processing functions located downstream of the method.

2. The method according to claim 1, **characterised in that** the signal reflected by a wind turbine is recognised by analysing the variation over time, during the obsemation duration, of the amplitude of the received raw signal S_{b}(t).

3. The method according to claim 2, **characterised in that** a signal reflected by a wind turbine is recognised by finding amplitude peaks and by determining the duration of these peaks and the amplitude deviation that exists between these peaks and the mean value of the signal S_{b}(t) over the obsemation duration, said deviation being compared with a fixed threshold, with the exceeding of the threshold signifying that the signal is considered to be a signal reflected by a wind turbine.

4. The method according to claim 3, **characterised in that** the spurious signal model s(t) that is generated is a signal, the amplitude of which at the instants where the signal S_{b}(t) has amplitude peaks is equal to the amplitude of S_{b}(t), and the amplitude of which is zero for the remainder of the time.

5. The method according to claim 3, **characterised in that** the spurious signal model s(t) that is generated is a signal the amplitude of which, in the event that the signal is considered to be a signal reflected by a wind turbine, is equal to the maximum amplitude of S_{b}(t).

6. The method according to claim 1, **characterised in that** said first module (13) generates a spurious signal model s(t) on the basis of real-time external information that is (15) transmitted to the radar, said information providing indicators relating to the operating state of the wind turbine for which the signal has been detected.

7. The method according to any one of the preceding claims, **characterised in that** said first module (13) for recognising the signal reflected by a wind turbine further comprises a sub-module (17) for filtering signals that correspond to fixed echoes.

8. The method according to any one of the preceding claims, **characterised in that** it further comprises an additional module (16) for estimating the ambient level A(t) in each zone for which the received signal S_{b}(t) is recognised as corresponding to the signal reflected by a wind turbine, the estimated level being transmitted to the processing functions located downstream of the method.
